# DEMANDE DE BREVET EUROPEEN

(11) **EP 0 769 362 A2**
(43) Date de publication de la demande: **23.04.1997**
(21) Numéro de dépôt: 96112058.1
(22) Date de dépôt: 26.07.1996
(51) Int. Cl.: B29C 65/08, B32B 3/20, H01B 7/08

(54) **Procédé pour la réalisation de gaines isolantes tubulaires et gaines isolantes tubulaires obtenues**

(30) Priorité: 28.07.1995 IT VI950126
(71) Demandeur: Camerra, Stefano, 36040 Brendola, Vicenza (IT); Camerra, Francesco, 36075 Montecchio Maggiore, Vicenza (IT); Camerra, Vincenzo, 36075 Montecchio Maggiore, Vicenza (IT)
(72) Inventeur: Camerra, Stefano, 36040 Brendola, Vicenza (IT); Camerra, Francesco, 36075 Montecchio Maggiore, Vicenza (IT); Camerra, Vincenzo, 36075 Montecchio Maggiore, Vicenza (IT)
(74) Mandataire: Bettello, Luigi, Dott. Ing.

(57) **Abrégé**

La présente invention, a pour objet un procédé de production de gaines isolantes tubulaires, en bandes parallèles éventuellement thermoformées et ultérieurement découpées, éventuellement, munies d'un toron ou une tresse de matière conductrice, de manière à obtenir des gaines isolantes tubulaires avec deux bandes diamétralement opposées et soudées ensemble par un procédé très économique (ultrason) et de haute productivité.

## Description

La présente invention a pour objet un procédé au moyen duquel il est possible d'obtenir des gaines isolantes tubulaires en partant de deux feuilles de films, de doublés, de tissus, de tissus non tissés ou de stratifiés de différentes compositions, de feutres et de papiers synthétiques.

Le procédé suivant l'invention est défini à la revendication 1.

L'invention s'étend en outre aux gaines isolantes tubulaires réalisées avec ledit procédé, ces gaines étant définies à la revendication 3.

Il est connu qu'actuellement, les gaines isolantes utilisées pour envelopper des conducteurs électriques de tous types sont obtenues par différents procédés.

On connaît les gaines tissées, obtenues en partant de fil de verre retors, lequel est travaillé avec des machines à tresser traditionnelles qui regroupent et entrecroisent plusieurs fils en continu, en créant une gaine homogène qui, ensuite, est terminée avec une pellicule de recouvrement qui peut être appliquée par extrusion, ou par le procédé, plus communément utilisé, de passage dans une cuve d'imprégnation avec des résines isolantes et de passage ultérieur dans un four de séchage vertical. Par ailleurs, on connaît habituellement les tubes enroulés en hélice réalisés à l'aide de petits rubans de films ou de papiers spéciaux convenablement rendus adhésifs, découpés à une très faible largeur et de très faible épaisseur, qui sont assemblés par enroulement en hélice.

En utilisant des films spéciaux, on peut obtenir des petits tubes thermorétractables.

Une troisième catégorie de petits tubes ou gaines est obtenue en partant de particules, ces tubes étant fabriqués par le procédé d'extrusion à chaud. Avec ce procédé, on produit des gaines noires en PVC. En changeant les produits de base, on peut obtenir différents produits, y compris des tubes thermorétractables si l'on utilise des polyoléfines spéciales.

Avec l'adoption du procédé selon l'invention, on réussit à obtenir des gaines isolantes tubulaires encore plus économiques à égalité de matériaux, avec une grande simplicité de fabrication et, en conséquence, avec une plus grande productivité.

Il est tout aussi possible d'assembler différents produits : films, doublés, stratifiés, composites, feutres, tissus, tissus non tissés et papiers synthétiques pour satisfaire les diverses spécifications d'emploi qu'on rencontre sur le marché.

Selon un autre mode de mise en oeuvre préféré de l'invention, on prévoit aussi d'insérer à l'intérieur des gaines un toron ou une tresse en matière conductrice, pour obtenir de cette façon un conducteur isolé prêt à l'emploi.

Naturellement, le brevet s'étend aussi au produit obtenu avec ce procédé.

On prévoit aussi de pouvoir exécuter, dans une phase ultérieure, des soudures et des coupes transversales pour obtenir des gaines fermées en bout, aptes à former des capuchons.

L'invention sera maintenant décrite de façon plus détaillée à l'aide du dessin annexé sur lequel :
la figure 1 représente un morceau de ruban comprenant plusieurs petits tubes isolants parallèles ;
la figure 2 montre un morceau de petit tube isolant après la coupe ;
la figure 3 représente une série de capuchons isolants fermés à une extrémité, réalisés avec le procédé selon l'invention ;
la figure 4 illustre un capuchon isolant unique.

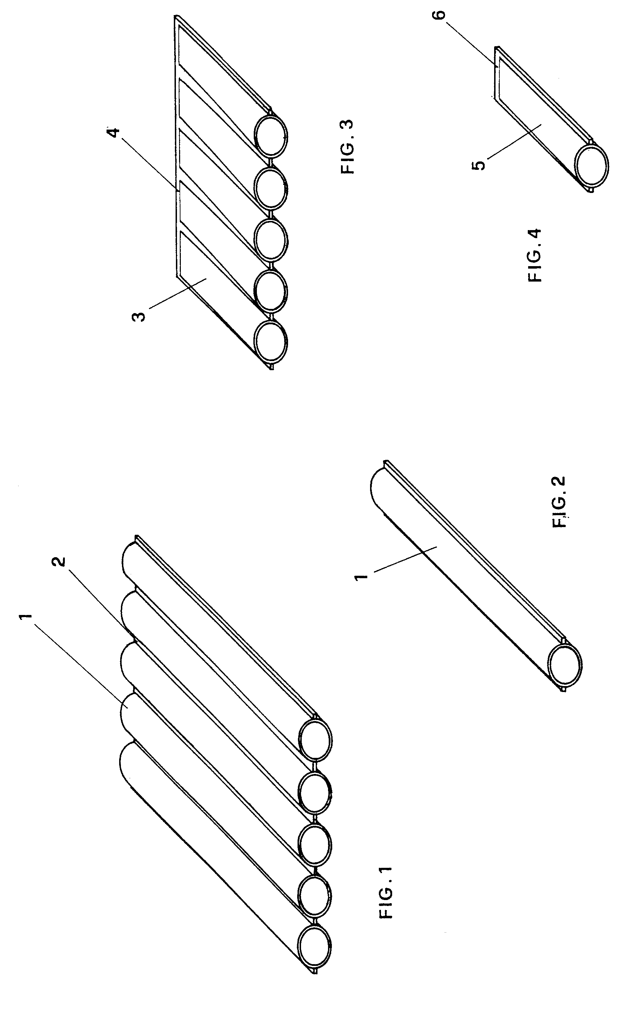

Comme on peut le remarquer sur la figure 1, le produit obtenu avec le procédé selon l'invention comprend un certain nombre de petits tubes parallèles 1, séparés les uns des autres par des bandes soudées 2 le long desquelles sont effectuées les opérations de coupe.

Sur la figure 2, le même petit tube est représenté isolément.

Après l'opération de coupe, il est possible d'effectuer, si nécessaire, l'opération de thermoformage des petits tubes, par exemple par le procédé dit à âme folle, c'est-à-dire tout d'abord en faisant passer les petits tubes sur une âme métallique de diamètre approprié, par exemple de 5 mm, pour les transférer ensuite sur une âme beaucoup plus mince, par exemple de 1 mm, dans un four de cuisson, pour les soumettre ensuite à une phase de refroidissement, comprenant une âme initialement de forme tronconique que l'on porte à un plus grand diamètre, par exemple de 8 mm, avec des plaques de refroidissement qui agissent sur les ailettes soudées du tube, pour les ramener à la température ambiante. Naturellement, ces appareillages ne sont pas représentés en détail, puisqu'ils peuvent prendre des formes et des aspects divers en fonction des exigences spécifiques.

La caractéristique de nouveauté du procédé est surtout relative à la formation de la nappe de gaines parallèles, espacées entre elles de quelques millimètres, pour permettre le soudage et le découpage des gaines individuelles.

On prévoit en outre la possibilité d'insérer à l'intérieur des gaines de petits câbles déjà isolés, des torons ou des tresses de matière conductrice, pour obtenir de cette façon un conducteur isolé prêt à l'emploi.

Selon une autre caractéristique de nouveauté de l'invention, on prévoit la possibilité de souder en bout un groupe de petits tubes 3 (figure 4), au moyen d'une soudure linéaire 4 en obtenant de cette façon une série de gaines, d'une longueur limitée, fermées à une extrémité.

En découpant l'ensemble ainsi obtenu le long des bandes intermédiaires ménagées entre les petits tubes, il est possible d'obtenir des gaines simples 5 (figure 4), fermées à une extrémité 6.

On obtient de cette façon des capuchons aptes, par exemple, à revêtir des conducteurs soudés les uns aux autres en bout.

## Revendications

1. Procédé pour la réalisation de gaines isolantes tubulaires, en partant de deux feuilles parallèles de films, de doublés, de tissus, de tissus non tissés, de stratifiés composites, de feutres et de papiers synthétiques, caractérisé en ce qu'on prévoit que les feuilles sont soudées ensemble le long de lignes longitudinales parallèles par le procédé aux ultrasons, ces feuilles étant en outre découpées en bandes parallèles composées de deux couches assemblées, les gaines pouvant être utilisées sous la forme de tubes simples ou de plusieurs tubes réunis ensemble.

2. Procédé selon la revendication 1, caractérisé en ce que les feuilles parallèles sont thermoformées après avoir été soudées ensemble le long de lignes longitudinales.

3. Gaine isolante tubulaire réalisée par le procédé selon la revendication 1, caractérisée en ce qu'elle comprend une âme plate, ou tubulaire si elle est thermoformée (1), ainsi que deux bandes minces (2) soudées ensemble entre les différents tubes dans des positions diamétralement opposées.

4. Gaine isolante tubulaire réalisée par le procédé selon la revendication 1, ainsi que selon la caractéristique de la revendication 3, caractérisée en ce qu'à l'intérieur de chaque gaine isolante tubulaire (1), est inséré un petit câble déjà isolé, un toron ou une tresse d'une matière conductrice, en obtenant ainsi un conducteur isolé prêt à l'emploi.

5. Capuchon isolant tubulaire, réalisé par le procédé selon la revendication 1, ainsi que selon la revendication 3, formé en soudant les tubes (1) transversalement aux soudures précédentes, ou en les découpant de manière à obtenir des articles (3) fermés (en 4) à une extrémité et ouverts à l'autre.
